# EUROPEAN PATENT APPLICATION

(11) **EP 1 995 586 A2**
(43) Date of publication of application: **26.11.2008**
(21) Application number: 08156680.4
(22) Date of filing: 21.05.2008
(51) Int. Cl.: G01N 21/35, G01N 21/03

(54) **Optical gas sensor**

(30) Priority: 21.05.2007 GB 0709674
(71) Applicant: Clairair Limited, Witham Essex CM8 3EU (GB)
(72) Inventor: Doncaster, Alan Mason, Maldon Essex CM9 4YL (GB)
(74) Representative: Hindle, Alistair Andrew

(57) **Abstract**

There is disclosed a gas sensor (1) comprising an electromagnetic radiation source (55), a detector (57) which is sensitive to radiation from the source (57) and a waveguide (14,16,18) which comprises at least a part of an optical path from the source (55) to the detector (57) through a gas sample, the waveguide (14,16,18) comprising a first waveguide portion (14) which extends from the radiation source (55) and a reflector (16) which is arranged to change the direction of and laterally displace radiation conducted from the source (55) through the first waveguide portion (14) into a second waveguide portion (18) which is separate to the first waveguide portion (14) and which conducts received radiation towards the detector (57). The gas sensor (1) can be formed as a layered structure. A convoluted passage (50a,50b) allows gas access to the optical path.

## Description

### Field of the invention

The invention relates to the field of optical gas sensors where electromagnetic radiation from a source is attenuated by interaction with a target gas and measured by a detector, enabling the concentration of the target gas in a gas sample to be deduced from the attenuation of radiation.

### Background to the invention

Issues relating to the invention will be illustrated with reference to non-dispersive sensors using infra-red radiation (NDIR sensors), but the invention is also applicable to dispersive sensors and sensors which are based on the absorption of electromagnetic radiation of other wavelengths.

NDIR gas sensors rely on the attenuation of radiation by a target gas in a gas sample. The amount of attenuation is a function of the length of the target gas through which radiation passes from the source to the detector (the optical path length), the concentration of the target gas along the optical path from the radiation source to the detector, the nature of the target gas and the wavelengths of electromagnetic radiation which are measured by the detector. In order to obtain a desired level of sensitivity to target gas concentration with specific optical components, it is necessary to provide a sufficiently long optical path length to ensure that there is sufficient attenuation of the electromagnetic radiation between the source and the detector by the target gas. However, there are practical considerations which restrict the overall size of gas sensors, such as a desire to minimise the bulk of sensors or a requirement to conform to industry standard dimensions. In the case of sensors which receive a gas sample by diffusion, it is advantageous to minimise the distance through which a gas sample must diffuse to reach the optical path in order to minimise the response time of the sensor. Some embodiments of the invention address the problem of maximising the optical path length within a given size of sensor. Some embodiments address the problem of maximising the optical path length within generally cylindrical sensors as this shape of sensor is in common use in the gas sensing industry and it is desirable to conform to industry standards.

Many examples of NDIR sensors have previously been described. In general, NDIR sensors include a radiation source, a detector which is sensitive to radiation from the source, and an optical path through which the radiation passes as it travels from the source to the detector. Means are provided to enable a gas sample which may contain the target gas to be introduced into the optical path. These means may be passive (e.g. holes through which the gas sample can diffuse) or active (e.g. a pump). The detector measures the intensity of radiation of one or more defined wavelengths which correspond to absorption lines of the target gas to produce a measurement signal. Typically, the measurement signal is compared with a reference signal which is related to the intensity of radiation at one or more defined wavelengths which are not absorbed by the target gas.

One class of NDIR sensor uses a tube, with the radiation source and detector at opposite ends of the tube, and means to cause a gas sample to flow through the tube. Such sensors are disclosed in, for example, GB 2,317,010 (EEV Limited) and GB 2,368,392 (Draeger Medizintech GmbH). Larger versions, for example the sensors disclosed in GB 2,353,591 (Draeger Sicherheilstech GmbH) and US 6,455,854 (Zellweger Analytics Limited) have open paths. These types of sensor are not suitable for applications where a compact sensor is preferred. Sensors with open paths are vulnerable to errors introduced by ambient electromagnetic radiation.

GB 2,396,405 (E2V Technologies Limited) discloses the provision of a relatively long optical path length in a confined volume by making use of grooves which are arranged in, for example, a flat spiral or threaded arrangement. Again, the source and detector are located at opposite ends of the optical path. However, radiation within the grooves makes many reflections between the source and the detector, leading to very substantial attenuation of the radiation. A variant of this concept which uses a labyrinth and suffers from the same problem of substantial attenuation of radiation due to many reflections is disclosed in GB 2,372,099 (Dynament Limited). Sensors which use circumferential paths in a single layer structure are known, for example in GB 2,372,099 and GB 2,369,884 (Draeger Safety AG & Co KGaA). These sensors are compact, but performance is reduced by attenuation due to the number of reflections of radiation on the optical path. Other known sensors include optically active surfaces contained within a small volume, such as the ellipsoidal surface described GB 2,316,172 (EEV Limited). In each of these cases, the radiation source and detector are located at opposite ends of the optical path and spaced apart.

Another arrangement of sensor, which is generally used for larger sensors, includes a reflective surface which is spaced apart from both the radiation source and detector. Light from the radiation source is directed through the gas sample to the reflective surface which reflects it back towards the detector. Radiation which emanates from the source towards the reflective surface passes through the gas sample, where a proportion of the radiation is absorbed by molecules of the target gas. Molecules of the target gas which have absorbed radiation are not then available to absorb radiation which has been reflected from the reflective surface until the molecules have relaxed back to their normal state. This has the effect of reducing the apparent optical path length of absorbing molecules of target gas, and becomes a particular problem at higher concentrations. Some aspects of the present invention relate to sensors configured so that the radiation source and detector are proximate to each other (rather than being at spaced apart ends of an elongate tube), which facilitates the provision of a compact sensor, arranged to minimise the attenuation of radiation due to reflection and the reduction in apparent optical path length caused by overlap of light incident on and reflected by a reflective surface.

Some aspects of the present invention aim to provide solutions to the problem of minimising ingress of external electromagnetic radiation into the optical path of a gas sensor. Some embodiments address the problem of providing a path for the ingress of a gas sample into the optical path by diffusion while restricting ingress of electromagnetic radiation by the same path.

Some aspects of the present invention relate to the problem of providing a sensor with a structure which enables it to be manufactured in a cost-effective fashion.

Within this document and the appended claims, the term "waveguide" refers to a structure which guides electromagnetic radiation along its length, such as a generally tubular opening defined by reflective walls.

### Summary of the invention

According to a first aspect of the present invention there is provided a gas sensor comprising an electromagnetic radiation source, a detector which is sensitive to radiation from the source and a waveguide which defines at least a part of an optical path from the source to the detector through a gas sample, the waveguide comprising a first waveguide portion which extends from the radiation source and a reflector which is arranged to change the direction of and laterally displace radiation conducted from the source through the first waveguide portion into a second waveguide portion which is separate to the first waveguide portion and which conducts received radiation towards the detector.

The use of a reflector between the first and second waveguide portions facilitates the creation of a relatively long length waveguide in a given volume. As the reflector changes the direction of and laterally displaces electromagnetic radiation (hereafter 'radiation') into a second waveguide portion which is separate to the first waveguide portion, in use, radiation which has been reflected by the reflector and which will be conducted to the detector will not pass through the region of the first waveguide portion which is closest to the reflector, maximising the effecting pathlength of absorbing analyte molecules within the gas sample.

The sensor may be arranged such that the mean direction of travel of radiation which enters the second waveguide from the reflector differs from the mean direction of travel of radiation which is incident on the reflector from the first waveguide by an angle of at least 90°, at least 135° or preferably at least 170°. Preferably, the reflector generally reverses the direction of and laterally displaces radiation conducted through the first waveguide portion into a second waveguide portion which is separate to the first waveguide portion.

The sensor typically comprises a body which encompasses the source and detector and comprises a cavity which defines the optical path from the source to the detector, which optical path comprises the waveguide.

Preferably, the waveguide (and typically the entire optical path) includes only a single reflector that changes the direction of radiation and laterally displaces it from one waveguide portion to another separate waveguide portion. This minimises the loss of radiation due to absorption on reflection. One or more additional reflective elements may be provided, such as a reflective element to direct radiation from a waveguide portion into the detector, however the use of such reflective elements is preferably minimised.

Preferably, the radiation source and detector are adjacent, the first waveguide portion guides radiation away from the source and detector, and the second waveguide portion guides radiation back towards the source and detector. Thus, an arrangement in which the radiation path is generally away from the sensor and detector, and then generally back towards the sensor and detector can be provided, facilitating construction of a compact sensor, while minimising the loss of apparent optical path length due to radiation which is incident on, and radiation which is reflected from, the reflector passing through the same portion of the gas sample.

Preferably, the first and second waveguide portions are incurvate. Typically, the first and second waveguide portions curve in the same sense. This facilitates the provision of a relatively long path length for radiation between the source and the detector in a given volume. Preferably, the incurvate first and second waveguide portions overlap. Preferably, incurvate first and second waveguide portions are located in parallel planes. Preferably, the waveguide does not comprise any straight portion with a length which exceeds 10%, 5% or 2% of the overall length of the waveguide. The waveguide may include no straight portion. This reduces the loss of electromagnetic radiation which would occur if the waveguide included both incurvate and straight portions.

The sensor may be generally cylindrical having an axis and opposed end faces. Typically, the first and second waveguide portions are located in separate planes which are orthogonal to the axis. Preferably, the first and second waveguide portions curve with a radius of curvature which is less than the radius of the cylinder. This also facilitates the provision of a relatively long path length for radiation between the source and the detector in a cylinder of given radius.

Each of the first and/or second waveguide portions may curve with a constant radius of curvature. This contributes to minimising the loss of radiation due to absorbance by the reflective walls of the waveguide portions. The first and second waveguide portions may curve with different radii of curvature to allow flexibility of location of the source and detector. The first and/or second waveguide portions may comprise two successive sections which curve with different constant radii of curvature, to allow design freedom in selecting the location of the source, detector and/or other components. The first and/or second waveguide portions may have constant cross-sections along their length. The first and/or second waveguide portions preferably have a non-rectangular cross-section. The first and/or second waveguide portions preferably have a generally semi-circular cross-section. This reduces the mean number of reflections of electromagnetic radiation along the length of the waveguide portions, increasing the proportion of electromagnetic radiation which is conducted from the source to the detector.

The sensor may comprise a first layer and a second layer. The reflector may be formed by portions of the first and second layers. Preferably, a third layer is provided intermediate the first and second layers, wherein the first waveguide portion is located to a first side of the third layer, the second waveguide portion is located to the opposed second side of the third layer and the reflector directs radiation from the first waveguide portion through an aperture in the third layer into the second waveguide portion. Preferably, the sensor is configured to allow gas sample access into the waveguide (typically directly into both the first and second waveguide portions) through the third layer (and typically also through an aperture in the first and/or second layers).

The first waveguide portion may be defined by a groove in the first layer and a portion of the first surface of the third layer (which may, for example, be flat or grooved). The second waveguide portion may be defined by a groove in the second layer and a portion of the opposite second surface of the third layer (which may, for example, be flat or grooved). The first waveguide portion may be defined by a groove on the first surface of the third layer and a portion of the inward facing surface of the first layer (which may, for example, be flat or grooved). The second waveguide portion may be defined by a groove on the second surface of the third layer and a portion of the inward facing surface of the second layer (which may, for example, be flat or grooved). Where the first and second waveguide portions are formed by the first or second surfaces respectively of the third layer and the inward facing surface of the first or second layer respectively, this facilitates a convenient manufacturing process in which the surfaces of the first, second and third layer which define the waveguide portions are open, enabling them to be conveniently machined (e.g. where they are to be made from metal) or coated with a reflective material (such as a metal layer) which is to form the walls of the waveguide, where this construction is preferred. The use of waveguides within the body of the sensor, rather than using the internal surface of the outer surface of the sensor body, as reflective conduits for radiation, enables the gas volume within the sensor to be kept reasonably small, increasing the response time of the sensor to changes in target gas concentration.

The first and third layers may comprise cooperating formations which restrict the ingress of external radiation between the first and third layers into the optical path such that it is detectable by the detector. For example, the third or first layer may comprise a lip around at least a portion and preferably all of the periphery of the optical path and the first or third layer respectively may comprise a corresponding groove into which the lip fits. The first surface of the third layer may comprise a raised portion which defines a wall of the first waveguide and which fits into a corresponding groove, which defines the remainder of the first waveguide, in the first layer. Alternatively, the first surface of the third layer may comprise a groove which defines a portion of the first waveguide into which is fitted a corresponding ridge formed by the inward facing surface of the first layer, which defines the remainder of the first waveguide. The second and third layers may comprise cooperating formations which restrict the ingress of radiation between the second and third layers into the optical path such that it is detectable by the detector. For example, the third or second layer may comprise a lip around at least a portion of the periphery of the optical path and the second or third layer respectively may comprise a corresponding groove into which the lip fits. The second surface of the third layer may comprise a raised portion which defines a wall of the second waveguide and which fits into a corresponding groove, which defines the remainder of the second waveguide, in the second layer. Alternatively, the second surface of the third layer may comprise a groove which defines a portion of the second waveguide into which is fitted a corresponding ridge formed by the inward facing portion of the third layer, which defines the remainder of the second waveguide. Cooperating formations are typically adjacent overlapping formations.

Typically, radiation from the radiation source passes through the waveguide at a range of angles. Typically, the radiation source is omnidirectional and radiation from the radiation source which passes through the waveguide does so at a diverse range of angles.

Preferably, the reflector comprises a first reflective portion onto which radiation from the first waveguide portion is first incident and a second reflective portion which directs radiation from the first reflective portion into the second waveguide portion, wherein either or both of the first and second reflective portions are concave. Preferably, either or both of the first and second reflective portions are part-spherical. Where the first reflective portion is concave (preferably part-spherical), this has the effect of directing radiation which is incident on the first reflective portion at a diverse range of angles directly onto the second reflective portion and not back along the first waveguide portion. Preferably, the first and second reflective portions each constitute portions of the same part-sphere and together form a part-sphere. The first and second reflective portions may be different parts of a continuous reflective surface. Typically, a wall between the first and second waveguide portions extends up to the centre of the part-sphere. This has the effect that radiation which is incident on the first and second reflective portions is reflected into the second waveguide portion with only one or two reflections, irrespective of the angle at which radiation is incident from the first waveguide portion onto the first reflective portion and with no or minimal backscattering of radiation back along the first waveguide portion.

Preferably, the walls of the first and second waveguide portions, and preferably also the walls which define the entire optical path from the source to the detector, are internal walls of the sensor, and are not the walls of a generally hollow gas retaining cavity. This facilitates minimisation of the gas volume within the sensor, whilst maintaining suitable optical path length, leading to a sensor with a relatively rapid response time.

The sensor may comprise a passage through which a gas sample which is external to the sensor can penetrate the interior of the waveguide, wherein the passage comprises one or more bends so that there is no direct path for electromagnetic radiation which is external to the sensor to penetrate into the waveguide. A gas sample will typically penetrate the waveguide by diffusion although active gas moving means (such as a pump) could be employed. Preferably, the passage extends between the waveguide and a recess which extends inward from a surface of the sensor (typically a top surface of the sensor which will be presented to a gas sample in use) into the sensor. The recess may comprise an aperture which connects with a chamber within the sensor, such as a disc, which is broader than the aperture. This chamber preferably has a height of less than 25% of its width, to facilitate the attenuation of radiation which penetrates the chamber through the aperture. Two or more passages may extend from the recess (e.g. from the chamber) into different regions of the waveguide (e.g. the first and second waveguide regions). The passage may fork to conduct gas to more than one different region of the waveguide (e.g. the first and second waveguide regions). The one or more passages preferably comprise at least one, and preferably at least two bends. Preferably, the one or more passages are convoluted. Preferably, the one or more passages extend from the recess (e.g. from the chamber) in the same plane as the surface of the sensor from which the recess extends. The recess may extend directly into the detector cavity.

Preferably, at least one of the said passages extends into the waveguide at an orientation which makes an angle of at least 75°, and preferably at least 90° to the central axis of the waveguide, in the direction in which radiation is travelling from the source to the detector at the point where the passage extends into the waveguide. Accordingly, if any external radiation does penetrate the waveguide from the passage, it will do so at an angle which means that it will either reflect from the walls of the waveguide many times, and therefore be attenuated before it is incident on the detector, or travel backwards towards the source. Preferably, the said angle is in the range 75° to 105° so that any radiation which penetrates the waveguide from at least one of the said passages reflects from the walls of the waveguide many times, and is attenuated.

Preferably, a passage comprises both a curved portion and a generally straight portion which intersect such that the straight portion joins the curved portion at an angle. This arrangement facilitates attenuation of any radiation which enters the passage as radiation which passes along the straight portion, or curved portion with minimal reflections per unit distance will not be at the correct orientation to pass along the other of the straight or curved portions at the optimal orientation to minimise the number of reflections which it encounters.

Where the sensor is formed from first and second layers with a third layer intermediate the first and second layers, the recess preferably extends from a surface of the sensor through at least one of the first and second layers, and also through the third layer. Preferably, the passages which extend from the recess to the waveguide are formed as grooves in one or more of the inwards facing surface of the first layer, the inward facing surface of the second layer, the first surface of the third layer and the second surface of the third layer. This allows convenient construction of a sensor including passages to allow the penetration of gas into the waveguide. Preferably, the passages are defined by a groove in a layer (for example, the first layer) and a protrusion from an adjacent layer (for example, the third layer) which extends partially into the groove to prevent the ingress of radiation between the adjacent layers.

Preferably, the sensor comprises one or more outputs, and includes electronic circuitry, which is preferably mounted within the sensor, which provides an output which is related to the concentration of the target gas and which mimics the output of a non-optical gas sensor to the same concentration of the target gas, for example the output from a catalytic gas sensor to the same concentration of the target gas. Thus, the internal circuitry may produce a voltage or current output, or circuitry which mimics other electronic circuit components.

The sensor may comprise an external housing which is sealed, and the housing may be of a flame-proof material. Accordingly, the gas sensor may be explosion proof and/or intrinsically safe and therefore suitable for gas sensing in environments with flammable materials.

According to a second aspect of the present invention there is provided a gas sensor comprising at least two body portions in contact with each other which together define a gas sample volume, an electromagnetic radiation source and a detector which is sensitive to radiation from the source, the sensor further comprising at least one gas access pathway through which a gas sample can diffuse into the gas sample volume, wherein the body portions comprise co-operating formations which resist the penetration of external electromagnetic radiation into the gas sample volume, between the body portions.

Touching regions of body portions which are in contact with each other may form the walls of a waveguide. The co-operating formations may extend along the touching regions of body portions which are in contact with each other. The co-operating formations may comprise a recess and a co-operating ridge which extends into the recess. The co-operating formations preferably provide no direct path for electromagnetic radiation to penetrate the gas sample volume.

The gas access pathway may comprise an aperture. Preferably, the gas access pathway comprises a passage. The at least two body portions in contact with each which together define a gas sample volume may comprise a first layer and a second layer, optionally with a third layer intermediate the first and second layer.

Further optional features of the gas sensor correspond to the optional features described above in relation to the first aspect of the present invention. Preferably, the gas sensor is a gas sensor according to the first aspect of the present invention wherein the gas sample volume comprises the optical path and the body portions in contact with each other together define the waveguide.

According to a third aspect of the present invention there is provided a gas sensor comprising a body which defines a gas sample volume, an electromagnetic radiation source and a detector which is sensitive to radiation from the source, wherein an optical path from the source to the detector passes through the gas sample volume, the sensor further comprising at least one passage through which a gas sample can diffuse into the gas sample volume, wherein the passage comprises at least one, or at least two bends, such that there is no direct light path through the passage.

Optional features correspond to the features discussed above in relation to the first and second aspects of the invention. Preferably, the gas sensor is a gas sensor according to the first aspect of the invention.

### Description of the Drawings

An example embodiment of the present invention will now be illustrated with reference to the following Figures in which:
Figure 1 is a partially transparent plan view of a gas sensor, showing the features of the top and bottom, but not middle layers;
Figure 2 is a perspective view of the bottom layer of the sensor, viewed from above;
Figure 3 is a perspective view of the top layer of the sensor, shown from below;
Figure 4 is a perspective view of the middle layer, shown from above;
Figure 5 is a perspective view of the underside of the middle layer;
Figure 6 is an exploded perspective view of the gas sensor, generally from above;
Figure 7 is an exploded perspective view of the gas sensor, shown from below;
Figure 8 is a perspective view of the bottom layer of the sensor, shown from below;
Figure 9 is a ray trace diagram of a cross section through the sensors, in the region of the reflective coupling from the first wave guide portion to the second wave guide portion;
Figure 10 is a ray trace diagram of a cross-section through the reflective coupling which guides radiation into the detector from the second waveguide portion;
Figure 11 is a plan view of a cylindrical gas sensor, with a diameter of 32mm and a depth of 16.6mm;
Figure 12 is an exploded perspective view of the gas sensor of Figure 11;
Figure 13 is a further exploded perspective view of the gas sensor of Figure 11;
Figure 14 is a side view of the gas sensor of Figure 11, part cut away through the outer housing; and
Figure 15 is a cross-section through the cylindrical gas sensor of Figure 11.

### Detailed Description of an Example Embodiment

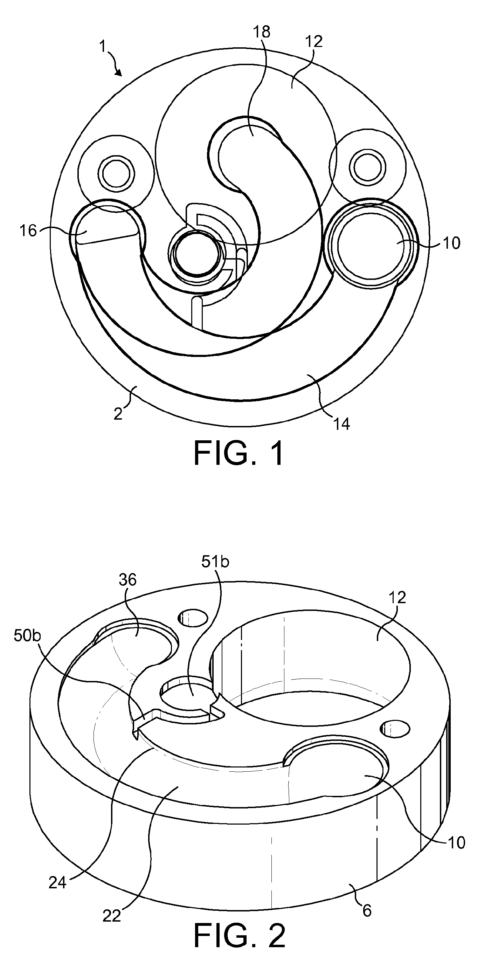

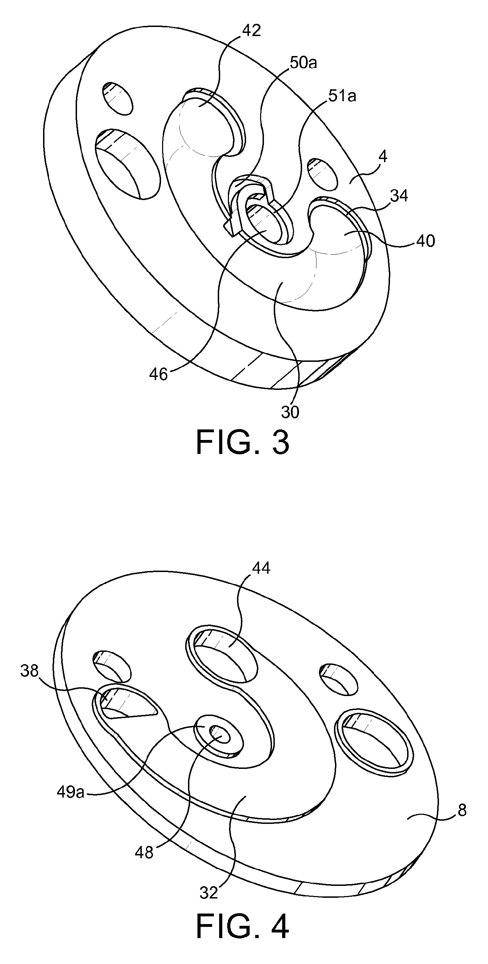

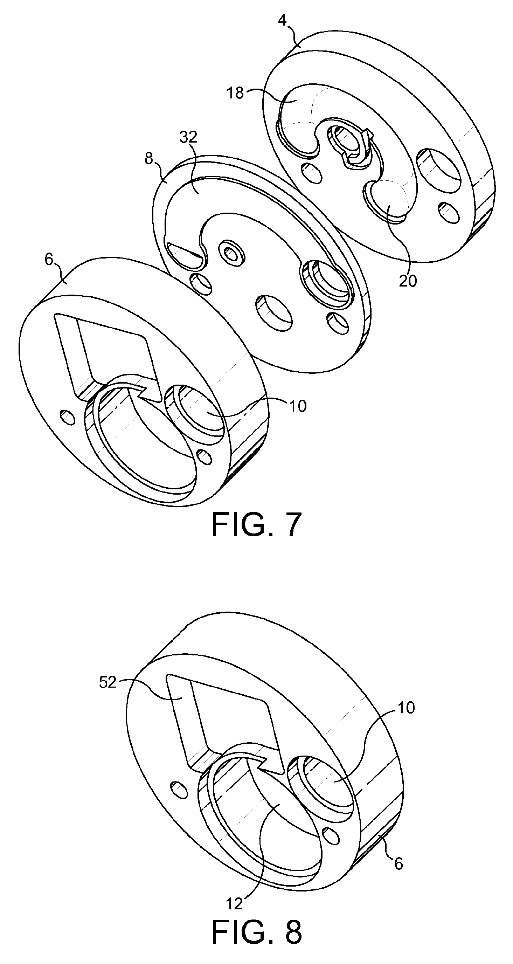

With reference to Figure 1, a gas sensor 1 comprises a body 2 made up from three layers, a top layer 4 (which functions as the first layer), a bottom layer 6 (which functions as the second layer), and a middle layer 8 (which functions as the third layer). These layers are shown individually in Figures 2 through 8. The optical sensor includes an infra-red lamp (not shown in Figure 1), which functions as the source of electromagnetic radiation and is located within a light source cavity 10. A detector which is sensitive to infra-red light (not shown in Figure 1) functions as the detector and is located in a detector cavity 12. The source and detector are housed within the body of the sensor and light travels from the source to the detector via an optical path defined by a cavity within the sensor. As well as any gas space within the source cavity or detector cavity which is located on the optical path from the sensor to the detector, the optical path comprises a waveguide which extends from the source to the detector and comprises a first waveguide portion 14, a first reflector 16, a second waveguide portion 18 which is separated from the first waveguide portion by the middle layer, and is thereby separate to the first waveguide portion, and a second reflector 20 which directs light from the second waveguide portion onto the detector. The source and detector are located within the bottom layer.

As can be seen in Figure 2, the first waveguide portion is partially defined by a rounded groove 22 in the surface of the bottom layer. A recessed lip 24 extends around the periphery of the first waveguide portion, the source cavity and the reflector.

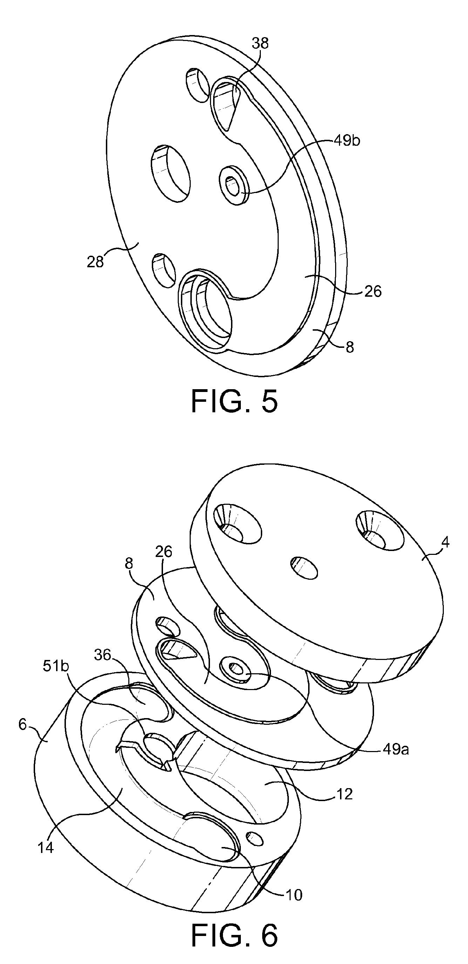

With reference to Figure 5, the bottom surface of the middle layer includes a raised portion 26, which mates with the recessed lip. Thus, the interior of the first waveguide portion is defined by the curved wall of the groove in the bottom layer, and by the raised portion of the underside of the middle layer. Because the raised portion of the bottom surface of the middle layer protrudes from the generally flat underside 28 of the middle layer, this resists the ingress of light from the outside of the sensor, between the middle layer and the bottom layer. The raised portion of the bottom surface of the middle layer and the edge of the rounded groove on the first waveguide portion are cooperating formations. They are adjacent in the finished sensor and overlap, resisting the ingress of light between the formations.

Similarly, the second waveguide portion is formed by a groove 30 in the underside of the middle layer, and a raised portion 32 on the top surface of the middle layer, which rests on a recessed step 34 of the top layer. Again, this arrangement resists the ingress of external light into the optical path between the middle layer and the top layer.

The first and second waveguide portions curve with a constant radius of curvature, and have a constant cross-section. This reduces the number of reflections along the optical path.

The first waveguide portion terminates in a part-spherical reflector which directs light which is received from the first waveguide portion through a generally semi-circular aperture 38 in the middle layer, onto a second part-spherical reflector 40 which directs light received from the first reflector, through the aperture, into the second waveguide portion. The first and second part-spherical reflectors together form a reflector which is arranged to change the direction of and laterally displace radiation conducted through the first waveguide portion into the second waveguide portion, which is separated from the first waveguide portion by the middle layer. In the example embodiment, the reflector serves to reverse the average direction of travel of radiation which is incident on the first part-spherical reflected portion.

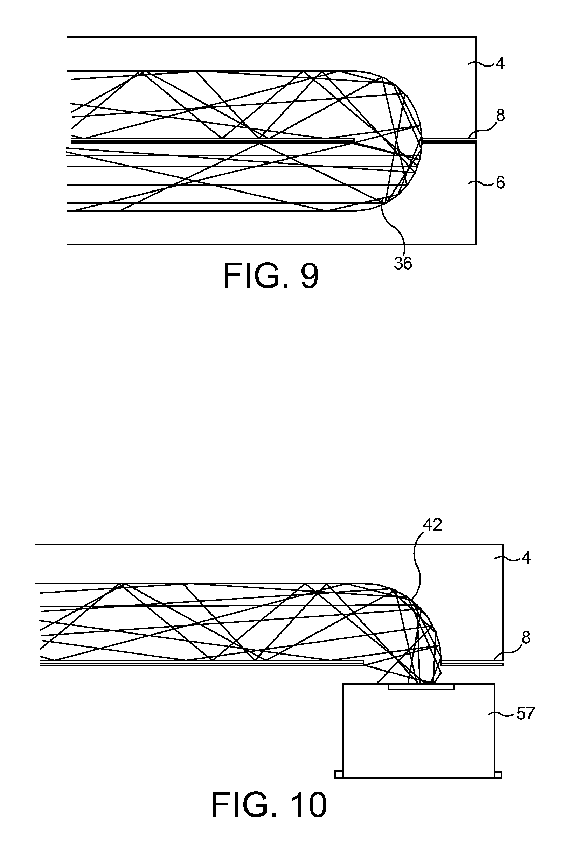

Figure 9 illustrates the effect which the reflector has on incident light. Bar any stray light from manufacturing imperfections, all the light which is incident on the reflector is directed into the second waveguide portion with only one or two reflections. Light which has been travelling generally along the length of the first waveguide portion will continue to be directed generally along the length of the second waveguide portion. This is important, because light which is travelling at a substantial angle to the walls of the waveguide portions will be reflected many times and substantially attenuated. Because the light which is incident on the first part-spherical reflector portion is displaced laterally into the separate second waveguide portion, there is not a region at the end of the first waveguide portion where molecules of target gas, which have already absorbed photons before they are incident on the reflector, may interact with light which has been reflected from the reflector. This can only happen actually within the reflector. This minimises the loss of effective optical path length due to the light being incident on molecules of target gas which have absorbed one or more photons and have not yet relaxed to their normal state.

A further reflector 42, which is also part-spherical, is provided to reflect light into the detector, through a further aperture 44 in the middle layer. Figure 10 is a ray trace diagram showing the reflection of light from the second waveguide portion of the detector. The detector could be of any type suitable to monitor radiation from the source, which is sensitive to the portion of the electro-magnetic spectrum which is appropriate to the absorption lines of the target gas. In the present example which uses infra-red light, the detector could be a pyroelectric detector, a lead salt detector, a thermopile detector, or another infra-red sensitive detector. As is typical for an NDIR sensor, the detector is sensitive to light of a measurement wavelength range which includes the wavelength of absorption lines of the target gas, and a reference wavelength range which does not include wavelengths of which there is a significant absorption by the target gas. The detector may have a plurality of openings for radiation, with interference filters to select the measurement or reference wavelength range. Interference filters can be incorporated into the detector, or fitted outside broadly transmissive windows of the detector.

Gas access to the optical path is provided by passages 50a and 50b in the top and bottom layers of the sensor, which intersect with and are in gaseous communication with a disc-shaped volume formed by the gap between protrusions 49a, 49b and corresponding congruent ledge 51a and recess 51b respectively. This disc-shaped volume is in gaseous communication with gas external to the sensor via a recess, denoted by an aperture 46 in the top layer. The passages extend from the periphery of the disc-shaped volume into the first and second waveguide portions. The interior of the waveguide is in gaseous communication with the ambient air outside the sensor. Gas diffuses through the recess, radially outwards, through the disc-shaped volume.

Notably, the passages extend at right angles to the depth of the recess, to restrict the amount of light which is reflected into the passages. The disc-shaped volume is thin (for example, it may have a depth of less than 25% of its radius) such that light which penetrates the disc-shaped volume generally reflects many times before it reaches the passages. The passages comprise at least one bend to form a convoluted path, which reduces the amount of light which penetrates through the passages. The relatively narrow width of the passage (less than one tenth the width of the first and second wavelength portions) means that any radiation which did manage to enter the passage would be reflected many times, and substantially attenuated. The final portion of each passage, where the passages meet the first and second waveguide portions respectively, extends into the waveguide portions either orthogonally to the direction of the waveguide portion, or slightly backwards, towards the light source. This ensures that any light which does penetrate the recess and passages enters the waveguide at an angle where it would be reflected many times and substantially attenuated, and/or pass backwards towards the source, rather than the detector. This arrangement facilitates rapid access of a gas while minimising the penetration of light from outwith the sensor.

The sensor is constructed by machining the first, second and third layers from aluminium, cut such as to provide a high level of reflectivity of infra-red light, as is known in the art. The use of layers and open features such as apertures, cut-out grooves and raised portions which can be formed by machining a block of material, allows the convenient construction of a sensor having enclosed internal waveguides. The top, middle and bottom layers could also be manufactured from other metals or manufactured from a plastics material and coated with a reflective material, such as a thin layer of gold. Again, this could easily be achieved because, although the waveguide is enclosed in the finished sensor, it is formed from open structures on the surface of the top, bottom and the middle layers.

The top, bottom and middle layers are located together. The layers are bonded with adhesive and also secured using screws which are fitted through screw-holes 54, which extend through each layer. The detector and light source are then inserted into the cavities in the base. Typically, they will be attached to a circuit board, which may include additional electronic circuitry, such as circuitry designed to mimic a Wheatstone bridge signal, a linearised voltage output, or any other type of analogue or digital electrical output, depending on the proposed application. Electronic circuitry can be included in cavity 52, next to the detector. The assembled sensor is then introduced into a housing which encapsulated the various layers while allowing gas access. The electronic circuitry, detector and radiation source, and one or more pins which protrude from the base of the sensor to comply with industry standard gas sensor footprints, can readily be potted along with the layers, within the surrounding housing.

In the example embodiment described above, the sensor is generally cylindrical, has an overall diameter of 20mm and a depth of 16.6mm, to conform with industry standards. The three layer structure within the housing would typically have a height of 7.6mm and a diameter of 17.8mm, allowing sufficient space for the components to be potted within the housing, which is particularly important for flameproof formats.

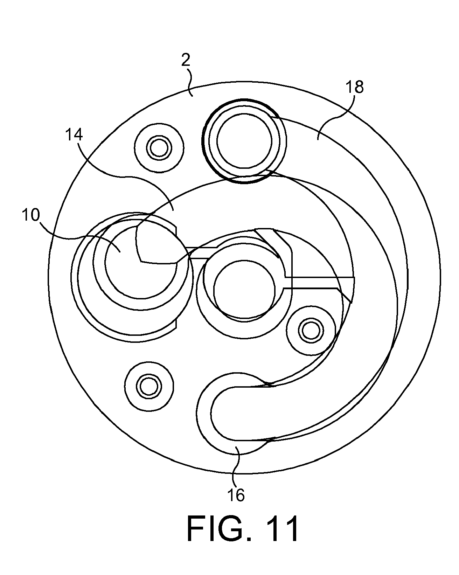

An alternative arrangement is illustrated in Figure 11, for a cylindrical sensor with an overall outer diameter of 32mm and a depth of 16.6mm, which conforms to an alternative industry standard. In this case, the internal layer structure would have a diameter of 28.8mm and a depth of 8.2mm.

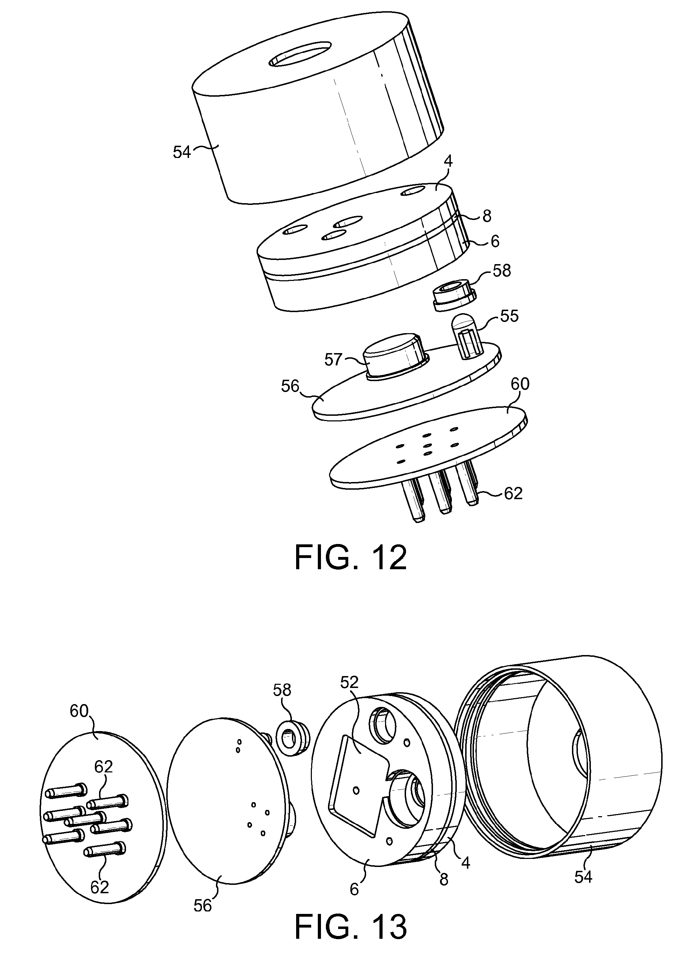

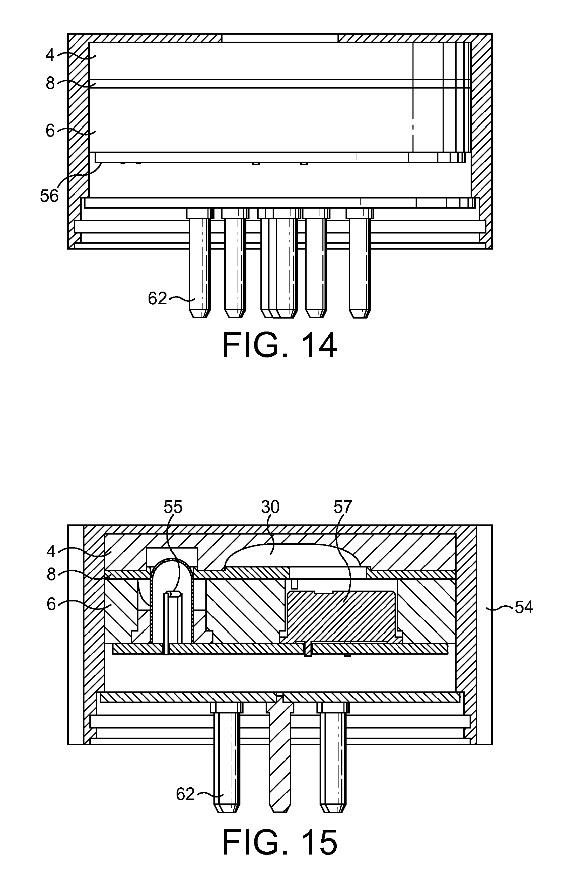

The construction of the sensor of Figure 11 is further illustrated in Figures 12 through 15, which show the housing 54, which fits over the assembled layers, a first circuit board 56 upon which are mounted the light source 55 (the base of which is covered by a light-excluding ring 58) and detector 57, a second circuit board 60 which connects the first circuit board to a plurality of pins 62 for electrical connection to external circuits.

Gas sensors according to the invention may be used to detect a variety of different target gases such as carbon dioxide and gaseous hydrocarbons.

Further modifications and variations may be made with the scope of the invention herein disclosed.

## Claims

1. A gas sensor (1) comprising an electromagnetic radiation source (55), a detector (57) which is sensitive to radiation from the source and a waveguide (14, 16, 18) which defines at least a part of an optical path from the source to the detector through a gas sample, the waveguide comprising a first waveguide portion (14) which extends from the radiation source, **characterised in that** the waveguide further comprises a reflector (16) which is arranged to change the direction of and laterally displace radiation conducted from the source through the first waveguide portion into a second waveguide portion (18) which is separate to the first waveguide portion and which conducts received radiation towards the detector.

2. A gas sensor according to claim 1, arranged such that the mean direction of travel of radiation which enters the second waveguide from the reflector differs from the mean direction of travel of radiation which is incident on the reflector from the first waveguide by an angle of at least 90°.

3. A gas sensor according to claim 2, wherein the reflector generally reverses the direction of and laterally displaces radiation conducted through the first waveguide portion into the second waveguide portion.

4. A gas sensor according to any one preceding claim, wherein the radiation source and detector are adjacent, the first waveguide portion guides radiation away from the source and detector, and the second waveguide portion guides radiation back towards the source and detector.

5. A gas sensor according to any one preceding claim, wherein the first and second waveguide portions are incurvate.

6. A gas sensor according to claim 5, wherein the sensor is generally cylindrical having an axis and opposed end faces, the first and second waveguide portions are located in separate planes which are orthogonal to the axis and the first and second waveguide portions curve with a radius of curvature which is less than the radius of the cylinder.

7. A gas sensor according to any one preceding claim, comprising a first layer and a second layer.

8. A gas sensor according to claim 7, wherein the reflector is formed by portions of the first and second layers.

9. A gas sensor according to claim 7 or claim 8, wherein a third layer is provided intermediate the first and second layers, the first waveguide portion being located to a first side of the third layer, the second waveguide portion being located to the opposed second side of the third layer and the reflector being arranged to direct radiation from the first waveguide portion through an aperture in the third layer into the second waveguide portion.

10. A gas sensor according to claim 9, wherein the first and third layers comprise cooperating formations which restrict the ingress of external radiation between the first and third layers into the optical path and/or the second and third layers comprise cooperating formations which restrict the ingress of external radiation between the second and third layers

11. A gas sensor according to claim 9 or claim 10, wherein the sensor is configured to allow gas sample access into the waveguide through the third layer.

12. A gas sensor according to any one preceding claim, wherein the sensor comprises a passage through which a gas sample which is external to the sensor can penetrate the interior of the waveguide, wherein the passage comprises one or more bends so that there is no direct path for electromagnetic radiation which is external to the sensor to penetrate into the waveguide.

13. A gas sensor comprising at least two body portions (6, 8) in contact with each other which together define a gas sample volume, an electromagnetic radiation source (55) and a detector (57) which is sensitive to radiation from the source, the sensor further comprising at least one gas access pathway (46, 50a, 50b, ) through which a gas sample can diffuse into the gas sample volume, **characterised in that** the body portions comprise co-operating formations (49a, 49b, 51a, 51b) which resist the penetration of external electromagnetic radiation into the gas sample volume, between the body portions.

14. A gas sensor according to claim 13, wherein touching regions of body portions which are in contact with each other form the walls of a waveguide.

15. A gas sensor (1) comprising a body (2) which defines a gas sample volume, an electromagnetic radiation source (55) and a detector (57) which is sensitive to radiation from the source, wherein an optical path from the source to the detector passes through the gas sample volume, **characterised in that** the sensor further comprises at least one passage (50a, 50b) through which a gas sample can diffuse into the gas sample volume, wherein the passage comprises at least one, or at least two bends, such that there is no direct light path through the passage.
